(19) Europäisches Patentamt
European Patent Office
Office européen des brevets

(11) **EP 2 930 966 B1**

(12) **EUROPEAN PATENT SPECIFICATION**

(45) Date of publication and mention of the grant of the patent:
**07.10.2020 Bulletin 2020/41**

(51) Int Cl.:
*H04W 16/28* (2009.01)     *H01Q 3/26* (2006.01)
*H04B 7/06* (2006.01)

(21) Application number: **14305518.4**

(22) Date of filing: **09.04.2014**

(54) **SELECTING BEAM-FORMING WEIGHTING VECTORS FOR ANTENNAE**

AUSWAHL VON STRAHLFORMUNGSGEWICHTUNGSVEKTOREN FÜR ANTENNEN

SÉLECTION DE VECTEURS DE PONDÉRATION DE FORMATION DE FAISCEAU POUR ANTENNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.10.2015 Bulletin 2015/42**

(73) Proprietor: **Alcatel Lucent**
**91620 Nozay (FR)**

(72) Inventors:
• **Lopez-Perez, David**
**DUBLIN, 15 (IE)**
• **Razavi, Rouzbeh**
**Dublin, 15 (IE)**

(74) Representative: **Mills, Julia et al**
**Script IP Limited**
**18 Bridge Street**
**Frome Somerset BA11 1BB (GB)**

(56) References cited:
**WO-A1-2013/089681     WO-A1-2013/124161**
**WO-A2-2006/132707     GB-A- 2 375 267**
**US-A1- 2002 147 032     US-A1- 2011 033 015**

• **CHAO-FANG SHIH ET AL: "FastBeam: Practical fast beamforming for indoor environments", 2014 INTERNATIONAL CONFERENCE ON COMPUTING, NETWORKING AND COMMUNICATIONS (ICNC), IEEE, 3 February 2014 (2014-02-03), pages 755-760, XP032585783, DOI: 10.1109/ICCNC.2014.6785431 [retrieved on 2014-04-09]**

**Description**

FIELD OF THE INVENTION

The present invention relates to wireless communication networks and in particular to controlling the beam-forming of signals transmitted from multiple antennae in network nodes to improve the signals received at user equipment to which the signals are directed.

BACKGROUND

Wireless communication networks are known and are generally arranged in a cellular system where radio coverage is provided to user equipment, for example, mobile telephones, by geographical area. Those geographical areas of radio coverage are known as cells. A base station is located in each geographical area to provide the required radio coverage. User equipment in the area served by a base station receives information and data from that base station and transmits information and data to that base station. There is an ever increasing demand for wireless multimedia services and this is driving strong growth in wireless data traffic. In order to accommodate this, various strategies such as the use of small cells, the use of new frequency bands and good inter-cell interference management are being considered.

From the spectrum utilization perspective, the spectrum in lower frequency bands is becoming scarce, and thus it is crucial to explore the use of higher frequency bands for radio access (e.g., 3.5GHz, 5GHz, 10GHz and beyond). However, higher frequency bands are difficult to accommodate in wide areas for macrocells due to coverage limitation issues and the need to alter existing base station (BS) equipment. One possibility might be to use low frequency bands in the wide areas through macrocells to provide basic coverage and to provide higher frequency bands in the local areas through small cells to provide high capacity and meet the wireless data traffic demands.

In such a setup, it is foreseen that antenna gains will be essential in higher frequency bands to compensate for their increased path losses and achieve the adequate coverage ranges. Beam-forming at small cells equipped with a plurality of antenna elements, which can be miniaturized at high frequency bands, could be a way to achieve such antenna gains. However, beam-forming with a number of antenna elements may have some drawbacks:
In frequency division duplex systems (FDD), beam-forming requires extensive user equipment (UE) measurements and post-processing on different antenna-specific pilot signals to derive channel state information (CSI) and estimate the appropriate beam-forming weight vector. It also requires continuous UE to base station (BS) CSI feedback, which can be extensive if non-codebook-based beam-forming is used.

In time division duplex systems (TDD), beam-forming requires an always-on UE pilot signal for CSI estimation at the base station together with a more complex transmitter to estimate the appropriate beam-forming weight vector.

It would be desirable to provide beam-forming techniques with reduced measurement, processing and feedback overheads. Document CHAO-FANG SHIH ET AL: "FastBeam: Practical fast beamforming for indoor environments" discloses algorithms to perform fast beamforming when relying only on RSSI measurements in indoor environments. Fast beamforming allows for a faster adaptation of the antenna weights for environments where the channel is time varying

GB2375267 discloses a way of directing antenna beams to portable devices at known location. It stores information relating a location of a portable device to an angular beam direction, and uses this data to direct a beam towards a device whose location is known. The location is preferably identified using GPS, but where this is not available the location can be estimated using other known techniques such as triangulation on the basis of timing of signals transmitted by a number of base stations.

SUMMARY

A first aspect of the present invention provides a method of selecting a beam-forming weighting vector said method comprising: receiving from a user equipment a radio frequency fingerprint comprising indications of characteristics of radio signals received from a network node and at least one neighbouring network node within a wireless communication network; accessing a data base associating a plurality of radio frequency fingerprints comprising said indications of characteristics of radio signals from said network node and from neighbouring network nodes with a plurality of beam-forming weighting vectors; and comparing said received radio frequency fingerprint with said radio frequency fingerprints within said data base and selecting one of said beam-forming weighting vectors in dependence upon said comparison, The present invention recognises that although beam-forming can be used to improve the signal received at a user equipment it is a fairly complex procedure which can have significant overheads in feedback signals, processing and measurements. In wireless communication networks in which a plurality of network nodes provide radio overage in discrete geographical areas know as radio cells, beam-forming of signals transmitted by the network nodes may be implemented to improve the signal at a UE. This beam-forming is done by adjusting at least one of phase and amplitude of a signal sent from different antennae at a network node such as a base station, in order to provide constructive interference at the user equipment thereby amplifying the signal and/or destructive interference at points where the signal may interfere with signals transmitted to other user equipment. In order to be able to do this, some idea of the paths followed by the signals to the user equipment need to be known. Conventionally in frequency division duplex FDD systems, the user equipment assesses the channel state information CSI of the different pilot signals on the different channels sent by the multiple antennae. It then determines the appropriate beam-forming weighting vector and transmits this to the base station. As can be appreciated this has a significant overhead both in signalling and in the power used at the user equipment. In TDD time division duplexing the user equipment transmits a beacon signal which the base station uses to estimate appropriate beam-forming weighting vectors. As can be appreciated both of these methods is expensive on user equipment battery power.

The present invention recognises that user equipment periodically transmits radio frequency fingerprints providing an indication of the characteristics of radio signals received from the serving network node and at least one neighbouring network node, these being used for handover when the user equipment roams the network. Thus, a base station will already receive these signals and these signals provide an indication of a location of the user equipment relative to the network nodes and as such are relevant to the beam-forming patterns that might be appropriate. Thus, the present invention uses a data base of radio frequency fingerprints and associated beam-forming weighting vectors to select an appropriate beam-forming weighting vector by simply comparing a received radio frequency fingerprint with those stored in the data base and determining from this which beam-forming weighting vectors are appropriate for a user equipment with a particular radio frequency fingerprint. In this way an efficient selection of beam-forming weighting vectors is produced using signals already transmitted between user equipment and base stations. Thus, the system has very low overheads and is backwards compatible with existing user equipment.

In some embodiments, the method comprises a further step of requesting said user equipment to generate a signal from which a beam-forming weighting vector can be determined, and recording a radio frequency fingerprint of said user equipment and said determined beam-forming weighting vector in said data base.

In some cases, the database may not be sufficient for some reason and this can be addressed by the network node requesting the user equipment to generate a signal so that a beam-forming weighting vector can be determined for a particular radio frequency fingerprint.

In this regard, the beam-forming weighting vector may be determined in one of the conventional ways, such that were time division duplexing being used, then the network node would request the user equipment to generate its beacon or pilot signal such that it could determine the required beam-forming weighting vector from that signal. Alternatively, in a frequency division duplexing system the network node would request the user equipment to calculate the required beam-forming weighting vector by analysing the channels from the various pilot signals and would receive a signal from the user equipment indicating the required beam-forming weighting vector. This information could then be stored in the data base with the radio frequency fingerprint, thereby updating the database and providing an improved database for use in the selection of beam-forming weighting vectors according to embodiments of the present invention.

In some embodiments, said step of comparing said received radio frequency fingerprint with said radio frequency fingerprints within said data base further comprises: determining a confidence in said beam-forming weighting vector selected by said comparison, and where said comparing step indicates a low confidence in said selected beam-forming weighting vector, updating said data base by performing the method of updating said data base described above.

In addition to the comparing step selecting a beam-forming weighting vector that it predicts will be the preferred beam-forming weighting vector, in some embodiments the method also determines a confidence it has in this prediction. Where it determines a low confidence, then the method may trigger an updating of the database by requesting a beam weighting vector determination for that radio frequency fingerprint. In this way, the database can be maintained to a certain accuracy for a wide range of radio frequency fingerprints. In effect, the database is continually improved by a continual learning process triggered when the database does not provide a predicted vector in which the method has confidence.

In some embodiments, said step of selecting said beam-forming weighting vector comprises determining from said data base said radio frequency fingerprints in said database that are closest in value to said received radio frequency fingerprint; and determining which of said beam-forming weighting vectors said closest radio frequency fingerprints are associated with; and weighting said closest associated beam-forming weighting vectors in dependence upon how close said associated radio frequency fingerprint values are to said received radio frequency fingerprint; and selecting said beam-forming weighting vector in dependence upon said weightings.

There are many different ways that the beam-forming weighting vector can be selected. In effect, one has a database of radio frequency fingerprints and beam-forming weighting vectors that correspond to them. Thus, when determining for a particular radio frequency fingerprint which beam-forming weighting vector is appropriate, one could simply find the closest radio frequency fingerprint within the database and select the beam-forming weighting vector associated with that. One could even provide an indication of confidence in the prediction in dependence upon how close the radio frequency fingerprints are to each other. However, another way of selecting a beam-forming weighting vector is to determine more than one closest radio frequency fingerprint and weight these according to how close they actually are to the received radio frequency fingerprint. The beam-forming weighting vector associated with them can then be weighted in this way and these weightings could be used to select the appropriate beam-forming weighting vector.

The confidence in the selected beam-forming weighting vector can also be determined in dependence upon the weightings. In this regard, if there are two beam-forming vectors with similar weightings then one might have lower confidence in the value than if one of the weightings were significantly higher than the others. Furthermore, the actual magnitude of the weighting value may provide some indication as to how confident one is to the answer predicted. Furthermore, in some cases all of the radio frequency fingerprints might be a long way from the received one in which case one would have low confidence and it would be a good indication that some more information should be added to the database.

In some embodiments, the method comprises the initial steps of generating said data base, said initial steps comprising: requesting said user equipment to generate a signal from which a beam-forming weighting vector can be determined; determining said beam-forming weighting vector; and recording said radio frequency fingerprint and said beam-forming weighting vector in said data base; repeating said initial steps a plurality of times for user equipment in a plurality of different locations.

The method of the present invention requires a database of beam-forming weighting vectors and radio frequency fingerprints. In some cases, this can be generated by the method using initial steps. These initial steps request the user equipment to generate a signal from which a beam-forming weighting vector can be determined and then record the radio frequency fingerprint of that user equipment and the beam-forming weighting vector that it is determined should be used for it. In this regard, when requesting the user equipment to generate a signal if time division duplexing is used, this request may be in the form of a request for a beacon signal while if frequency division multi duplexing is used, then the request may be in the form of a request of the user equipment to calculate the beam-forming vector and transmit the information to the network node. These steps are repeated a number of times for user equipment in different locations such that a database of radio frequency fingerprints and beam-forming weighting vectors is built up.

In some embodiments, said method further comprises no longer transmitting said request to said user equipment to generate said signal from which a beam-forming weighting vector can be determined, and selecting said beam-forming weighting vector by comparing said received radio frequency fingerprint with said radio frequency fingerprints stored in said generated data base.

At some point it may be determined to stop the initial steps and the method continues to determine the beam-forming weighting vectors by using the database and comparing the received radio frequency fingerprints with the values in the database. In this regard, no longer transmitting to the request the user equipment may include an active request to be transmitted for the network node in the case of time division duplexing such that the user equipment is instructed not to transmit the beacon signal any longer.

In some embodiments, the method comprises cross validating said database by selecting a beam-forming weighting vector for at least some of said radio frequency fingerprints received during said initial steps using said steps of said method according to a first aspect of the present invention, and determining an accuracy of said selecting, for each of said at least some of said radio frequency fingerprints by: determining how many of said selected beam-forming weighting vectors are the same as said beam-forming weighting vectors determined during said initial steps; and if an accuracy of more than a predetermined threshold is found, no longer transmitting said request to said user equipment to generate said signal from which a beam-forming weighting vector can be determined, and selecting said beam-forming weighting vector by comparing said received radio frequency fingerprint with said radio frequency fingerprints stored in said generated data base.

The point at which the initial steps of the method that built the database stops and the database is considered suitable for use can be determined by a cross validating method wherein the accuracy of the database so far accumulated is assessed using data that is received and for input to the database. In this regard, a received radio frequency fingerprint is compared with the values already accumulated in the database to determine what beam-forming weighting vector such a database would predict as the preferred beam-forming weighting vector. As the information received for that radio frequency fingerprint also comprises an actual calculated preferred beam-forming weighting vector, then one can compare the vector obtained from the database and the vector determined by conventional methods and from several such comparisons determine a accuracy that the data base provides. When the data base provides a suitable accuracy then the building of the database can stop and it can be used to determine beam-forming weighting vectors. In this regard, in some embodiments when the data base is being used a confidence in a beam-forming weighting vector is derived along with the preferred beam-forming weighting vector, and where the confidence is low, a value for that RF (radio frequency) fingerprint can be requested such that the database can be continually improved.

It should be noted that it might be that the database grows very large using these updating techniques and as some cases there are pruning techniques used to decrease the size of the database by determining where there are radio frequency fingerprints that are close in value to each other and have the same preferred beam-forming weighting vector and deleting these.

In some embodiments, said indication of radio signal characteristics comprises at least one of received strength of radio signal and quality of radio signal. In this regard, the received strength might be the power of the pilot signal received and the quality indicator may be a signal to interference noise ratio or some other signal to noise ratio. It should be noted that some indication of the path used by the signals is useful to determine the phase and/or amplitude adjustments required at the different antennae to generate the desired constructive and/or destructive interference. Given that the pilot signals on the channels are constant a measure of the potency of the signals received at the user equipment perhaps in the form of the strength and/or quality provides such an indication.

In some embodiments, said indications of radio signal characteristics comprise indications of a characteristics of a pilot radio signal transmitted by each network node.

In some embodiments, said plurality of beam-forming weighting vectors comprise beam-forming weighting vectors from a beam-forming codebook for antennae of said network node.

The plurality of beam-forming weighting vectors may have any number of different values, however in some cases they have a restricted number of values and are one of a number that appear in a beam-forming code book for the antennae of the network node. The database of the present invention is particularly applicable to such a case wherein there are a limited number of beam-forming weighting vectors to select between, the radio frequency fingerprint being used in that selection process.

A second aspect of the present invention provides a network node for operation in a wireless communication network comprising a plurality of network nodes each operable to support a radio cell providing a region of radio coverage allowing communication links to be established with user equipment, said network node comprising: receiving logic operable to receive from said user equipment a radio frequency fingerprint comprising indications of radio signal characteristics of radio signals received from said network node and at least one neighbouring network node within said wireless communication network; access logic operable to access a data base associating a plurality of radio frequency fingerprints comprising said indications of characteristics of radio signals from said network node and from neighbouring network nodes with a plurality of beam-forming weighting vectors; and comparison logic operable to compare said received radio frequency fingerprint with said radio frequency fingerprints within said data base; and selecting logic operable to select one of said beam-forming weighting vectors in dependence upon said comparison; and

A network node may be configured to select the required beam-forming weighting vector by accessing the database of the beam-forming weighting vectors and radio frequency fingerprints. The network node may be a base station and itself have a plurality antennae and transmitting logic for adjusting the phase of each of the signals transmitted from antennae using the selected beam-forming weighting vector or it may be a central network node that controls other network nodes and selects the beam-forming weighting vector and then transmits the vector to the network node that will be transmitting the signal.

In some embodiments, the network node comprises a data store storing the database.

The database may be stored in a central location which is accessed by the different network nodes, alternatively in some embodiments it is stored in the network node itself.

A third aspect of the present invention provides a computer programme which when executed by a computer causes said computer to perform the method according to a first aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates an active antenna array that uses beam-forming techniques to direct signals;
Figure 2 shows a user equipment within a wireless network compiling and transmitting a radio frequency fingerprint report on strength of neighbouring cell signals;
Figure 3 shows beam patterns resulting from codebook transmission on four antenna ports;
Figure 4 shows a network node according to an embodiment of the present invention;
Figure 5 shows a plurality of network node base stations and a central network node according to an embodiment of the present invention;
Figure 6 shows a flow diagram illustrating steps in a method of determining a beam-forming weighting vector according to an embodiment of the present invention; and
Figure 7 shows a flow diagram illustrating steps in a method of generating a beam-forming weighting vector/ RF fingerprint database and determining a beam-forming weighting vector from this data base according to an embodiment of the present invention.

DESCRIPTION OF THE EMBODIMENTS

Before discussing the embodiments in any more detail, first an overview will be provided.

Embodiments of the present invention provide a RF fingerprint-based beam-forming method that provides the benefits of dynamic beam-forming without incurring prohibitive measurement, post-processing and feedback overheads. Indeed, the proposed RF fingerprint-based beam-forming leverages existing UE handover measurements, and thus does not require UEs to perform any dynamic beam-forming specific measurement or feedback activities. This leads to UEs with reduced complexity and an extended UE battery life. Furthermore, the method is suitable for use with existing UEs. It is also important to note that the proposed RF fingerprint-based beam-forming can be applied to any type of base station, e.g., macro BSs, metro BSs, pico BSs, etc.

In effect the RF fingerprint data that is periodically sent by UEs is used in conjunction with a data base of previously collected RF fingerprint data and corresponding preferred beam-forming weighting vectors. The data base is generated using known techniques for deriving appropriate beam-forming vectors and the vectors derived in this way are stored alongside the RR fingerprint of the UE at that location. Once the data base has been generated, any newly received RF fingerprint data can be compared with the data base and provided there are similar RF fingerprints stored a suitable beam-forming weighting vector can be determined. The data base can be continually improved by requesting new beam-forming weighting vectors to be determined where, for example, the database does not store any similar RF fingerprint data.

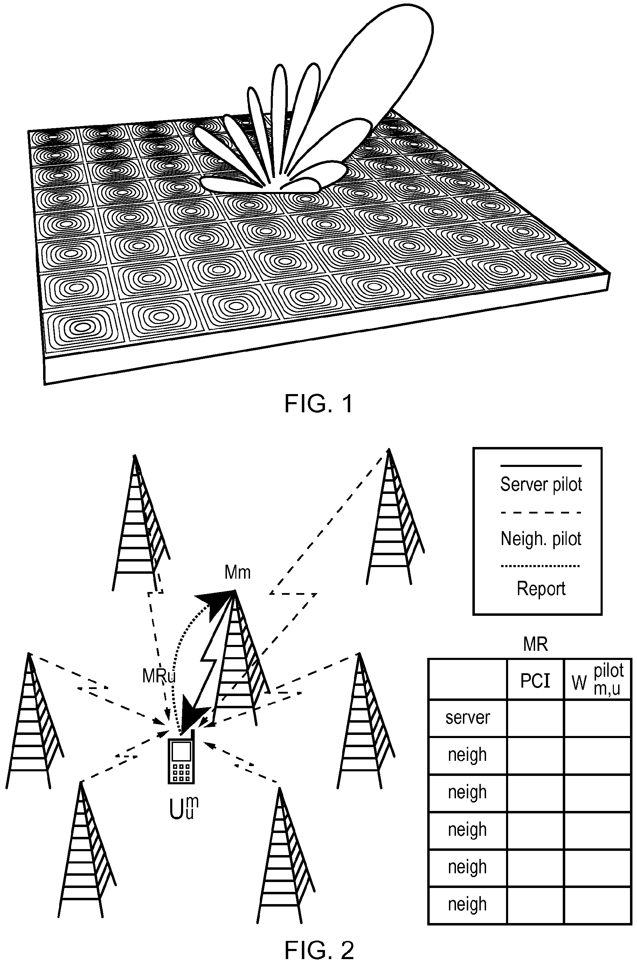

Figure 1 shows a beam-forming array using an active antenna array (AAAs) panel. This is a popular approach to provide large antennae gains to signals transmitted to UEs. AAAs integrate several radio frequency (RF) components (power amplifiers and transceivers) - conventionally part of the base station - with the antenna radiating elements. This allows electronic control, using signal processing, of the amplitude and phase of the signals transmitted from each antenna radiating element. Changing the amplitude and phase of the signal transmitted from each antenna radiating element by multiplying it with complex beam-forming weights may create constructive or destructive interference. Constructive interference is used to amplify the beam in a given direction, while destructive interference is used to point nulls in other directions. As a result, the direction of the radiated antenna beams can be precisely shaped and steered, vertically and horizontally.

Beam-forming, although it was above presented from a transmitting perspective, can also be applied to receiving antenna elements. Transmit beam-forming is currently used to optimize network coverage through network planning and electrical down-tilt. Moreover, it can be used in a more dynamic manner to improve network capacity by pointing antenna beams to intended static or nomadic UEs, thus increasing their signal quality and allowing the use of higher-order modulation and coding schemes (MCSs).

A key issue in dynamic beam-forming is the estimation of beam-forming weight vectors (i.e., amplitude and phase corrections). As a generic approach, the BS can deduce the appropriate beam-forming weight vector from UE transmissions through direction of arrival (DoA) or angle of arrival (AoA). However, in this case, estimations may be coarse and precise calibration of the BS RF paths may be required. More advanced algorithms based on CSI estimations can be used to determine the appropriate beam-forming weight vectors.

In FDD systems, where downlink-uplink channel reciprocity cannot be exploited, UE feedback is necessary to aid the BSs to assess CSI. Therefore, UEs need to continuously estimate the channel over different antenna-specific pilot signals, post-process these measurements to compute the beam-forming weighting vectors and finally feedback to the serving BS the computed beam-forming weighting vector or the adequate beam-forming codebook entry. This feedback can be extensive if non-codebook-based beam-forming is used. All these procedures pose a burden on the UE battery life, and the issues of outdated CSI feedback may also arise.

In TDD systems, downlink-uplink channel reciprocity can be exploited in order to allow the BS to obtain accurate CSI using UE pilot signals. This significantly simplifies beam-forming operation, but still requires precise calibration of the BS RF paths for accurate CSI estimation. Moreover, it is also requires that UEs continuously transmit the mentioned pilot signals, which also poses a burden on the UE battery life. A more complex transmitter is also required to estimate the appropriate beam-forming weight vector.

Random beam-forming may be a way to address the complexity issues of dynamic beam-forming since it does not require extensive CSI estimation and feedback. However, random beam-forming may not always achieve the required reliability that helps to achieve a proper user experience. Moreover, it leaves interference mitigation to chance, since there is no coordination in the forming of beams among neighbouring cells.

Embodiments of the present invention address the above using RF fingerprints. An RF fingerprint is essentially a UE measurement report indicating the received signal strength from the serving and neighbouring cells. As a routine part of their operation, UEs periodically send measurement reports, indicating the received signal strength of their serving and neighbouring cells to their serving BSs. As the pilot signals are constant these signal strengths are in effect an indication of signal attenuation. In addition, the serving BS can explicitly request its UEs to feedback measurement reports, where it can additionally specify the measurement characteristics. These measurement reports are critical for making handover decisions. Thus, these RF fingerprints are already continually collected from UEs, such that their collection does not require any additional or non-standard operations and overhead.

In order to use these RF fingerprint data to provide a beam-forming weighting vector in an efficient way, each received UE RF fingerprint is stored alongside its beam-forming weighting vector. Although the beam-forming weighting vector could have any value, in some cases it has been found to be convenient to use a limited number of beam-forming weighting values, using for example a codebook-based beam-forming which provides a certain number of possible beam-forming weighting vectors that can be selected, as is the case in Long Term Evolution (LTE). Thus, the received RF fingerprints may be stored associated with a beam-forming codebook entry, and a data base can be accumulated over time.

Once an accurate data base is built, the UE need no longer perform beam-forming specific measurements and feedback, rather the BS can use the RF fingerprints of the intended UE, that are reported anyway for handover purposes, to select the adequate beam-forming weight vector by comparing the received RF fingerprint with those stored in the database. This beam-forming weight or weighting vector can then be used to steer the beam in the UE direction.

The beam-forming weight vector selection maybe considered as a supervised machine learning classification problem in that the inputs are the RF fingerprints of the intended UE and the task is to select the adequate beam-forming codebook entry for this UE.

An embodiment of the present invention will be described with respect to an LTE (long term evolution) system. In LTE, cell-specific reference signals (CRSs) which act as pilot signals are comprised of known sequences of reference symbols, and are transmitted over fixed resource elements at a fixed transmit power, across the entire bandwidth and in all subframes. It is important to note that CRSs are not pre-coded, an important feature since all UEs in a cell use the same CRS irrespective of their configured transmission mode, speed, location, throughput requirements, etc.

CRSs are tied to the physical cell identity (PCI) of the transmitting cell, and thus neighbouring cells should have different CRSs. Moreover, as CRSs act as BS beacons for UEs, helping them to identify the different neighbouring cells, CRSs are used to assist both the cell selection and the handover procedures. CRSs are also used for estimating the channel from the BS to the UE for both demodulation and channel state estimation purposes.

When CRS is used for coherent demodulation and the signal intended for the UE is beam-formed, the BS should signal to the UE the beam-forming weight vector used in order to allow proper demodulation at the UE.

In order to assist the network in the mentioned cell selection and handover procedures, UEs feedback regularly or provide upon request of the serving cell a measurement report to its serving cell, which indicates the received signal received powers (RSRPs) measured by a UE on the CRSs of its serving cell and its neighbouring ones (see Fig. 2). These measurement reports are critical to trigger handovers, and collecting them does not require any additional or non-standard operations. In this application these UE measurement reports are also referred to as UE RF fingerprints.

Figure 2 shows user equipment within a wireless network comprising a plurality of base stations, the user equipment providing a measurement report regarding the cells pilot signals. In beam-forming, the signal to the UE is multiplied with complex weights that adjust the amplitude and phase of such signal in each radiating antenna element. This causes the output from the array of radiating antenna elements to form a transmit beam in the desired direction and reduces the output in other directions. Beam-forming is thus intended to provide an improved signal to a UE at a specific location by finding the appropriate beam-forming weight vector.

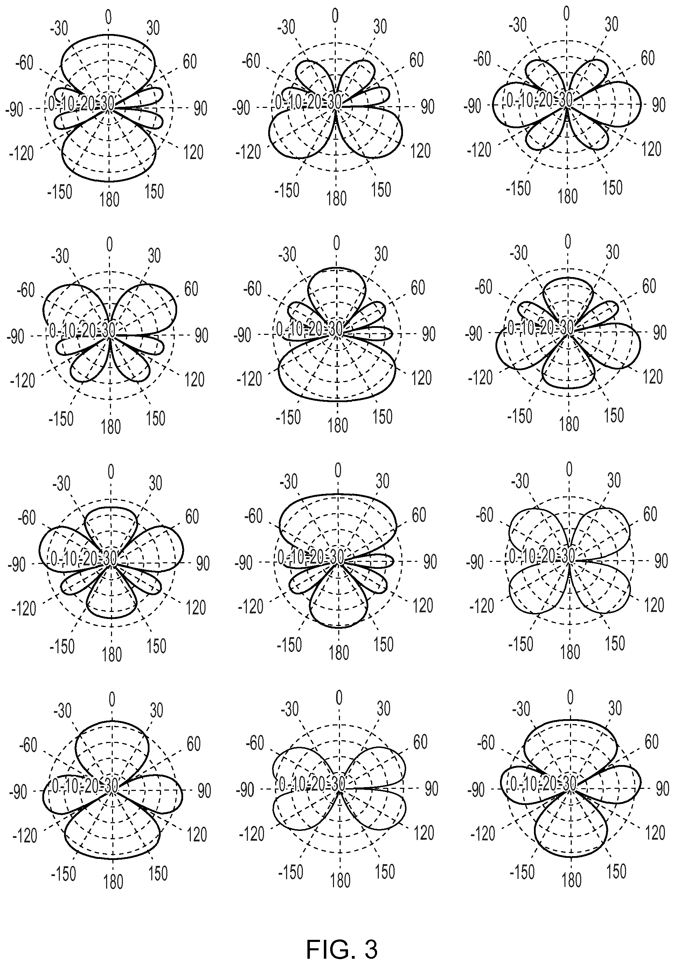

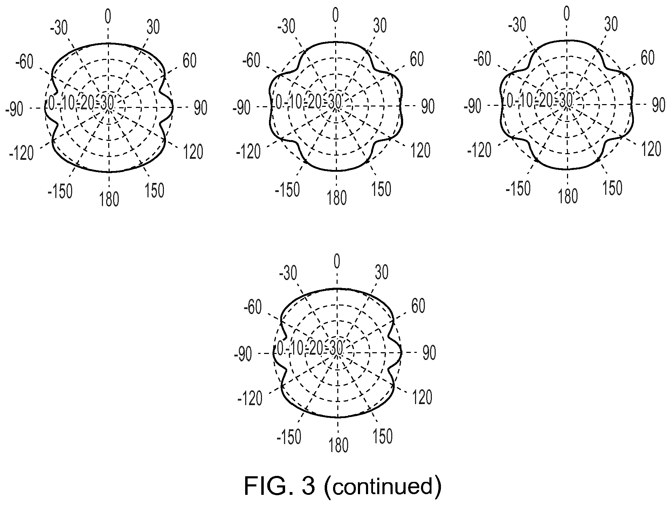

Codebook-based beam-forming can be viewed as a sort of channel quantization that facilitates low-rate feedback of CSI from the UE to the BS (for beam-forming purposes) and low-rate pre-coding signalling from the BS to the UE (for demodulation purposes). When using codebook-based beam-forming, the set of available beam-forming weight vectors is discrete. For example, in LTE, when using 4 antenna ports, 16 beam-forming weight vector are available that generate the 16 antenna patterns shown in Fig. 3. Even though a reduced number of possible vectors is used the beam-forming procedure still has to go through the burden of estimating CSI and post-processing it to derive the appropriate beam-forming codebook entry to be used.

Specialized algorithms that can be found in the literature can be used at the UE to determine the most appropriate beam-forming weight vector, i.e., the most appropriate antenna pattern in Fig. 3. The optimal beam-forming weight vector is the one that maximizes the signal quality of the received signal at the UE. As indicated before, most of these algorithms take as input CSI, and this CSI is derived on measurement over BS CRSs (or channel state information-reference signals (CSI-RS) in the latest LTE releases) in FDD systems based, or based on measurements over UE sounding reference signals (SRS) in TDD systems.

This entire process poses some complexity issues and translates into a burden on UE battery life.

Table 1. Codebook for transmission on antenna ports {0,1 ,2,3}.

| Codebook index | $u_n$ | Number of layers $v$ | | | |
|---|---|---|---|---|---|
| | | 1 | 2 | 3 | 4 |
| 0 | $u_0=[1\ -1\ -1\ -1]^T$ | $W_0^{(1)}$ | $W_0^{(14)}/\sqrt{2}$ | $W_0^{(124)}/\sqrt{3}$ | $W_0^{(1234)}/2$ |
| 1 | $u_1=[1\ -j\ 1\ j]^T$ | $W_1^{(1)}$ | $W_1^{(12)}/\sqrt{2}$ | $W_1^{(123)}/\sqrt{3}$ | $W_1^{(1234)}/2$ |
| 2 | $u_2=[1\ 1\ -1\ 1]^T$ | $W_2^{(1)}$ | $W_2^{(12)}/\sqrt{2}$ | $W_2^{(123)}/\sqrt{3}$ | $W_2^{(3214)}/2$ |
| 3 | $u_3=[1\ j\ 1\ -j]^T$ | $W_3^{(1)}$ | $W_3^{(12)}/\sqrt{2}$ | $W_3^{(123)}/\sqrt{3}$ | $W_3^{(3214)}/2$ |
| 4 | $u_4=\left[1\ (-1-j)/\sqrt{2}\ -j\ (1-j)/\sqrt{2}\right]^T$ | $W_4^{(1)}$ | $W_4^{(14)}/\sqrt{2}$ | $W_4^{(124)}/\sqrt{3}$ | $W_4^{(1234)}/2$ |
| 5 | $u_5=\left[1\ (1-j)/\sqrt{2}\ j\ (-1-j)/\sqrt{2}\right]^T$ | $W_5^{(1)}$ | $W_5^{(14)}/\sqrt{2}$ | $W_5^{(124)}/\sqrt{3}$ | $W_5^{(1234)}/2$ |
| 6 | $u_6=\left[1\ (1+j)/\sqrt{2}\ -j\ (-1+j)/\sqrt{2}\right]^T$ | $W_6^{(1)}$ | $W_6^{(13)}/\sqrt{2}$ | $W_6^{(134)}/\sqrt{3}$ | $W_6^{(1324)}/2$ |
| 7 | $u_7=\left[1\ (-1+j)/\sqrt{2}\ j\ (1+j)/\sqrt{2}\right]^T$ | $W_7^{(1)}$ | $W_7^{(13)}/\sqrt{2}$ | $W_7^{(134)}/\sqrt{3}$ | $W_7^{(1324)}/2$ |
| 8 | $u_8=[1\ -1\ 1\ 1]^T$ | $W_8^{(1)}$ | $W_8^{(12)}/\sqrt{2}$ | $W_8^{(124)}/\sqrt{3}$ | $W_8^{(1234)}/2$ |
| 9 | $u_9=[1\ -j\ -1\ -j]^T$ | $W_9^{(1)}$ | $W_9^{(14)}/\sqrt{2}$ | $W_9^{(134)}/\sqrt{3}$ | $W_9^{(1234)}/2$ |
| 10 | $u_{10}=[1\ 1\ 1\ -1]^T$ | $W_{10}^{(1)}$ | $W_{10}^{(13)}/\sqrt{2}$ | $W_{10}^{(123)}/\sqrt{3}$ | $W_{10}^{(1324)}/2$ |
| 11 | $u_{11}=[1\ j\ -1\ j]^T$ | $W_{11}^{(1)}$ | $W_{11}^{(13)}/\sqrt{2}$ | $W_{11}^{(134)}/\sqrt{3}$ | $W_{11}^{(1324)}/2$ |
| 12 | $u_{12}=[1\ -1\ -1\ 1]^T$ | $W_{12}^{(1)}$ | $W_{12}^{(12)}/\sqrt{2}$ | $W_{12}^{(123)}/\sqrt{3}$ | $W_{12}^{(1234)}/2$ |
| 13 | $u_{13}=[1\ -1\ 1\ -1]^T$ | $W_{13}^{(1)}$ | $W_{13}^{(13)}/\sqrt{2}$ | $W_{13}^{(123)}/\sqrt{3}$ | $W_{13}^{(1324)}/2$ |
| 14 | $u_{14}=[1\ 1\ -1\ -1]^T$ | $W_{14}^{(1)}$ | $W_{14}^{(13)}/\sqrt{2}$ | $W_{14}^{(123)}/\sqrt{3}$ | $W_{14}^{(3214)}/2$ |
| 15 | $u_{15}=[1\ 1\ 1\ 1]^T$ | $W_{15}^{(1)}$ | $W_{15}^{(12)}/\sqrt{2}$ | $W_{15}^{(123)}/\sqrt{3}$ | $W_{15}^{(1234)}/2$ |

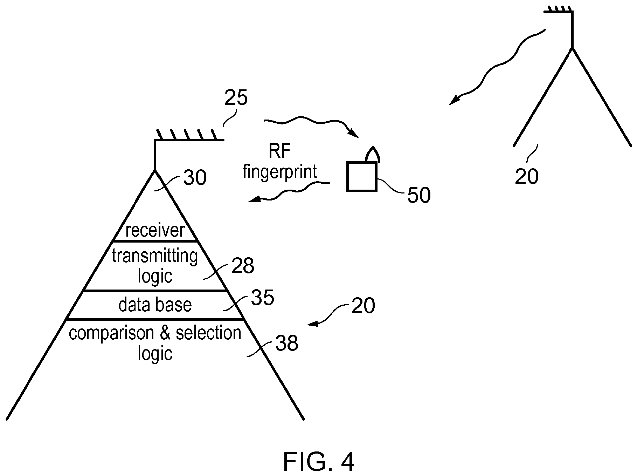

Figure 4 shows Antenna patterns resulting from codebook transmissions on antenna ports {0,1,2,3} of Table I.

Embodiments of the present invention propose the use of UE RF fingerprints in order to decide the preferred beam-forming codebook entry for each UE and thus reduce or avoid the need for UE CSI measurements and feedback.

In the proposed approach, the BS needs to associate each RF fingerprint reported by a UE to the preferred or optimal beam-forming codebook entry. In essence, we are associating geographical location identified by the RF UE fingerprint with beam-forming codebook entries. This can be done by using a simple supervised classification technique. Essentially, there will be an exploration phase, in which the UE is working using the standard beam-forming close-loop procedure and in which on reception of RF UE fingerprint samples from a UE, the BS will associate each RF UE fingerprint sample with the appropriate beam-forming codebook entry selected through the traditional beam-forming close-loop procedure. Once a sufficient number of RF UE fingerprint samples are collected (this can be itself derived through cross validation test of the machine learning technique being used), the exploration phase is closed and the operational phase begins. In the operational phase, the UEs stop using the standard beam-forming close-loop procedure. Instead, the BS uses an appropriate classification technique to estimate the optimal beam-forming codebook entry for a UE based on the reported RF fingerprints used for handover purposes. Our result shows that a k-nn classification is an effective and straightforward way to be applied and can cope well with the measurement report inaccuracies.

In some embodiments the base-station can also determine the confidence it has in any predicted beam-forming weighting vector and can reject predictions made with low confidence. Essentially, each estimator can additionally provide a measure of certainty behind their predictions. It has been shown that classification performance can be improved if predictions with low confidence are ignored. As an example, a measure of certainty for a k-nn classifier could be the weighted ratio of the number of neighbours with the k neighbours, which agree with the final classification decision. Once the prediction is rejected the conventional closed loop procedure may be performed to derive the appropriate beam-forming weighting vector required and this result may be stored in the data base thereby continually improving the data base.

Figure 4 shows a plurality of network nodes 20 communicating with user equipment 50. Each network node has an antenna 25 with multiple antenna elements each transmitting signals to the user equipment 50. The network node also has transmitting logic 28 for controlling the transmission of the signals and for weighting the signals to each of the antenna elements such that they are beam-formed to transmit a beam in a certain direction. In this regard, beam-forming weighting vectors are used which adjust the phase and amplitude of the signals transmitted by the multiple antennae such that constructive and destructive interference occur at certain points increasing the signal at user equipment and decreasing the signal at places where interference is to be avoided. There is also a receiver 30 for receiving signals from the user equipment 50. These signals include radio frequency fingerprint data which the user equipment transmits periodically and which includes information on the strength of the pilot signals from each of the different antennae of the network nodes that the user equipment receives signals from. This radio frequency fingerprint information can be used by logic within the network node to determine the location of the user equipment. It can also be used in embodiments of the invention to determine a preferred beam-forming weighting vector for the transmitting logic to apply to the signals transmitted from antenna 25 such that the signal received at the user equipment is improved.

Network node 20 also comprises data base 35 which comprises a store of received radio frequency fingerprint information from remote user equipment and the calculated beam-forming weighting vectors that are the predicted preferred beam-forming weighting vectors to be used for the user equipment at that location. This database can be used by the network node in conjunction with the comparison and selection logic 38 to determine on receipt of new radio frequency fingerprints from user equipment a predicted preferred beam-forming weighting vectors. This is done by comparing the received radio frequency fingerprint with those stored in the database. In this way, a beam-forming weighting vector can be determined.

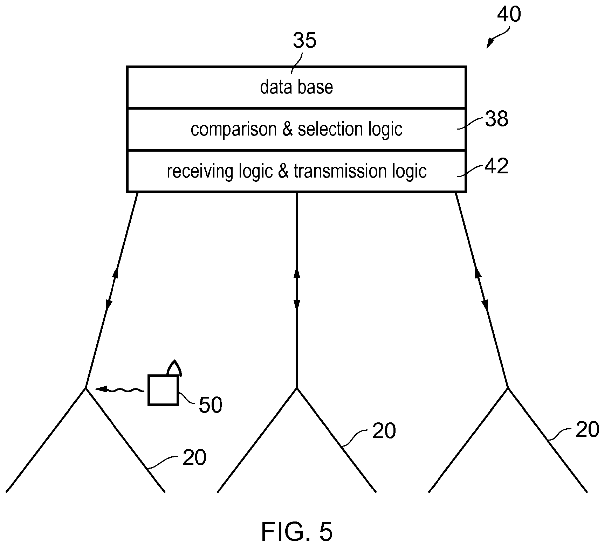

Figure 5 shows an alternative embodiment of a plurality of network nodes 20 and a central network node 40. This central network node has in this embodiment hard wired connections to the individual network nodes 20, although in other embodiments these connections may be wireless or may be a mixture of the two. This central controlling network node 40 comprises the database 35 comprising the radio frequency fingerprints and their associated beam-forming weighting vector. Thus, the various network nodes 20 receive signals from user equipment 50, including radio frequency fingerprint information, and transmit this information to network node 40 which accesses the database 35 and using comparison and selection logic 38 determines a preferred beam-forming weighting vector and transmits this to the network node 20 using the receiving and transmission logic 42.

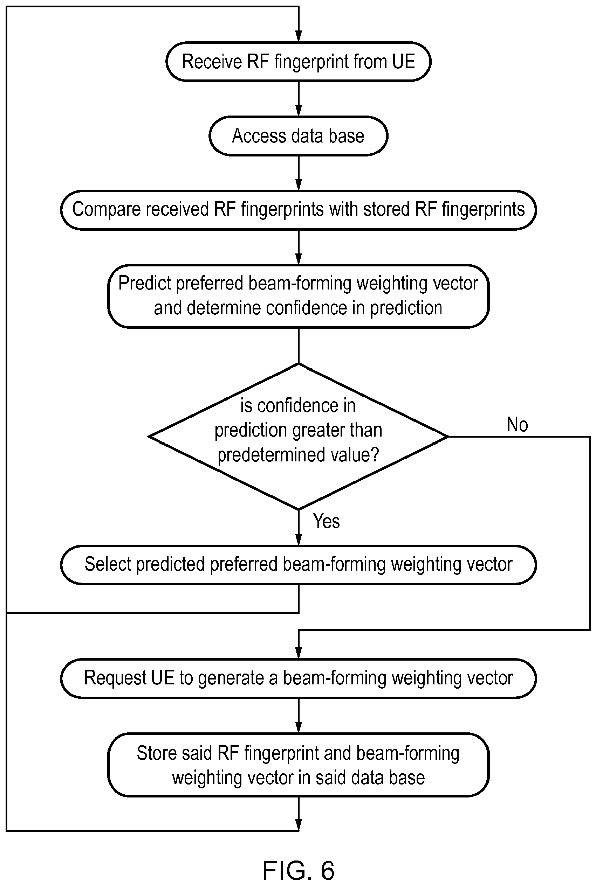

Figure 6 shows a flow diagram illustrating steps in a method according to an embodiment of the present invention. In this embodiment, radio frequency fingerprints are received from user equipment and the database of radio frequency fingerprints associated with beam-forming weighting vectors is accessed and the received radio frequency fingerprints are compared with the stored radio frequency fingerprints and a preferred beam-forming weighting vector is predicted using this comparison. Furthermore, a confidence in the prediction is also determined, this being based on how close the stored values are to the received values. It is then determined if the confidence in the prediction is greater than a predetermined value. If it is then the predicted preferred beam-forming weighting value is selected and the next radio frequency fingerprint is received from the user equipment.

If it is determined that there is not much confidence in the prediction then a request is sent to the user equipment to generate a beam-forming weighting vector. In response to this, the user equipment will analyse the channels of the various pilot signals transmitted by the network nodes and will determine from these an appropriate beam-forming weighting vector to use. It will then transmit this to the network node which will store the received radio frequency fingerprint and the beam-forming weighting vector in its database. In this way, the database will be updated where required.

The next radio frequency fingerprint from the user equipment is then received and the process is repeated.

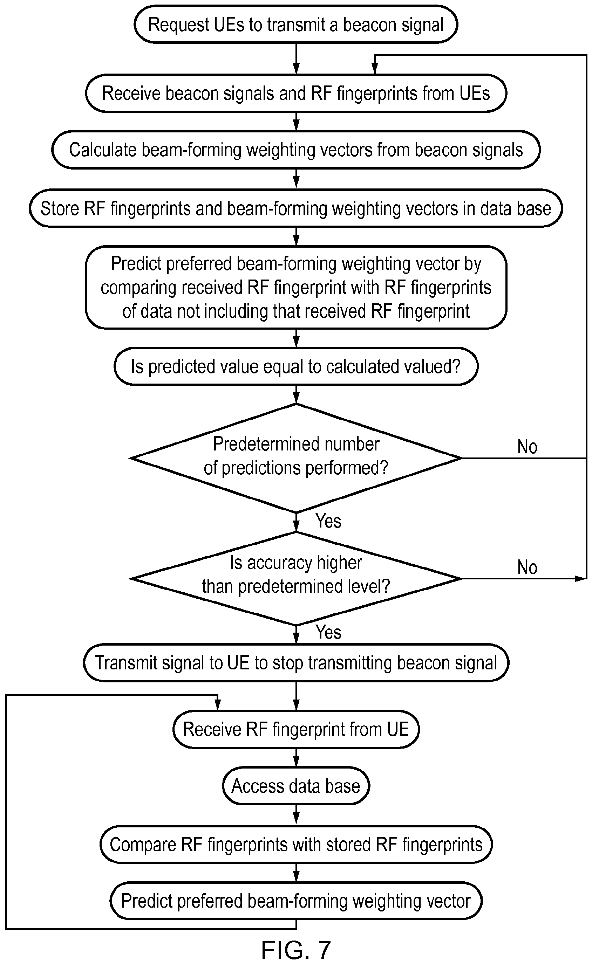

Figure 7 shows a further embodiment of the present invention. This embodiment uses a time division duplex system and requests user equipment to transmit a beacon signal. The beacon signal is received along with radio frequency fingerprints from the user equipment, and beam-forming weighting vectors are calculated from the beacon signals at the network node. The network node will then store the radio frequency fingerprints and beam-forming weighting vectors in a database. At a certain point the database will be cross-validated by comparing radio frequency fingerprints that have been received with radio frequency fingerprints of data in the database not including that received radio frequency fingerprint, and predicting from this comparison the preferred beam-forming weighting vector. It is then determined if the predicted value is equal to the calculated value. If it is then this is an indication that the database is functioning correctly. If it is not, it is indication of an inaccuracy in the database. This is performed a predetermined number of times and when this predetermined number of predictions has been formed it is determined if the accuracy is higher than a predetermined level. If it is not then the system continues to increase the size of the database by receiving beacon signals and RF fingerprints from the user equipment. If it is higher than the predetermined level then at this point the system will start to use the database itself to determine the beam-forming weighting vectors and it will transmit a signal to the user equipment indicating that it no longer needs the beacon signal to be transmitted. The UE can thus, save power by no longer transmitting this signal. When the network node receives RF fingerprints from the user equipment it will access the database, compare the received fingerprints with the stored fingerprints and predict the preferred beam-forming weighting vector.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method of selecting a beam-forming weighting vector said method comprising:

    receiving from user equipment (50) a radio frequency fingerprint comprising indications of characteristics of radio signals received from a network node and at least one neighbouring network node within a wireless communication network;
    accessing a data base (35) associating a plurality of radio frequency fingerprints comprising said indications of characteristics of radio signals from said network node and from neighbouring network nodes with a plurality of beam-forming weighting vectors; and
    comparing said received radio frequency fingerprint with said radio frequency fingerprints within said data base and selecting one of said beam-forming weighting vectors in dependence upon said comparison.

2. A method according to claim 1, comprising a further step of requesting said user equipment to generate a signal from which a beam-forming weighting vector can be determined, and recording a radio frequency fingerprint of said user equipment and said determined beam-forming weighting vector in said data base.

3. A method according to claim 2, wherein said step of comparing said received radio frequency fingerprint with said radio frequency fingerprints within said data base further comprises:
determining a confidence in said beam-forming weighting vector selected by said comparison, and where said comparing step indicates a low confidence in said selected beam-forming weighting vector, updating said data base by performing said method of claim 2.

4. A method according to any preceding claim, wherein said step of selecting said beam-forming weighting vector comprises
determining from said data base said radio frequency fingerprints in said database that are closest in value to said received radio frequency fingerprint; and
determining which of said beam-forming weighting vectors said closest radio frequency fingerprints are associated with; and
weighting said closest associated beam-forming weighting vectors in dependence upon how close said associated radio frequency fingerprint values are to said received radio frequency fingerprint; and
selecting said beam-forming weighting vector in dependence upon said weightings.

5. A method according to claim 4 when dependent on claim 3, wherein said confidence in said selected beam-forming weighting vector is determined in dependence upon said weightings.

6. A method according to any preceding claim, comprising initial steps of generating said data base, said initial steps comprising:

requesting said user equipment to generate a signal from which a beam-forming weighting vector can be determined;
determining said beam-forming weighting vector; and
recording said radio frequency fingerprint and said beam-forming weighting vector in said data base;
repeating said initial steps a plurality of times for user equipment in a plurality of different locations.

7. A method according to claim 6, comprising no longer transmitting said request to said user equipment to generate said signal from which a beam-forming weighting vector can be determined, and selecting said beam-forming weighting vector by comparing said received radio frequency fingerprint with said radio frequency fingerprints stored in said generated data base.

8. A method according to claim 6, comprising cross validating said data base by selecting a beam-forming weighting vector for at least some of said radio frequency fingerprints received during said initial steps using said steps of said method according to claim 1, and determining an accuracy for each of said at least some of said radio frequency fingerprints by:

determining how many of said selected beam-forming weighting vectors are the same as said beam-forming weighting vectors determined during said initial steps;
and if an accuracy of more than a predetermined threshold is found performing said method of claim 7 and if not, continuing with said initial steps.

9. A method according to any preceding claim, wherein said indication of radio signal characteristics comprises at least one of: received strength of radio signal and quality of radio signal.

10. A method according to claim 8, wherein said indications of radio signal characteristics comprise indications of a characteristics of a pilot radio signal transmitted by each network node.

11. A method according to any preceding claim, wherein said plurality of beam-forming weighting vectors comprise beam-forming weighting vectors from a beam-forming codebook for antennae of said network node.

12. A network node (20, 40) for operation in a wireless communication network comprising a plurality of network nodes each operable to support a radio cell providing a region of radio coverage allowing communication links to be established with user equipment, said network node comprising:

receiving logic (30, 42) operable to receive from said user equipment a radio frequency fingerprint comprising indications of characteristics of radio signals received from said network node and at least one neighbouring network node within said wireless communication network;

access logic operable to access a data base (35) associating a plurality of radio frequency fingerprints comprising said indications of characteristics of radio signals from said network node and from neighbouring network nodes with a plurality of beam-forming weighting vectors; and

comparison logic (38) operable to compare said received radio frequency fingerprint with said radio frequency fingerprints within said data base; and

selecting logic (38) operable to select one of said beam-forming weighting vectors in dependence upon said comparison.

13. A network node according to claim 12, said network node further comprising a plurality of antennae; and transmitting logic (28, 42) for adjusting said phase of each of said signals transmitted from said plurality of antennae using said selected beam-forming weighting vector.

14. A network node according to any one of claims 12 and 13, said network node comprising a data store storing said data base.

15. A computer program which when executed by a computer causes said computer to perform the method according to any one of claims 1 to 11.

**Patentansprüche**

1. Verfahren zum Auswählen eines Strahlformungsgewichtungsvektors, wobei das Verfahren Folgendes umfasst:

Empfangen eines Funkfrequenzfingerabdrucks, der Anzeigen von Eigenschaften von Funksignalen umfasst, die von einem Netzwerkknoten und mindestens einem benachbarten Netzwerkknoten in einem drahtlosen Kommunikationsnetzwerk empfangen werden, von einer Teilnehmereinrichtung (50);

Zugreifen auf eine Datenbank (35), die eine Vielzahl von Funkfrequenzfingerabdrücken, die die Anzeigen von Eigenschaften von Funksignalen vom Netzwerkknoten und von benachbarten Netzwerkknoten umfassen, mit einer Vielzahl von Strahlformungsgewichtungsvektoren verknüpft; und

Vergleichen der empfangenen Funkfrequenzfingerabdrücke mit den Funkfrequenzfingerabdrücken in der Datenbank und Auswählen von einem der Strahlformungsgewichtungsvektoren in Abhängigkeit vom Vergleich.

2. Verfahren nach Anspruch 1, das ferner einen Schritt des Anforderns, dass die Teilnehmereinrichtung ein Signal erzeugt, anhand dessen ein Strahlformungsgewichtungsvektor bestimmt werden kann, und des Aufzeichnens eines Funkfrequenzfingerabdrucks der Teilnehmereinrichtung und des bestimmten Strahlformungsgewichtungsvektors in der Datenbank umfasst.

3. Verfahren nach Anspruch 2, wobei der Schritt des Vergleichens des empfangenen Funkfrequenzfingerabdrucks mit den Funkfrequenzfingerabdrücken in der Datenbank ferner Folgendes umfasst:
Bestimmen eines Vertrauens zu dem Strahlformungsgewichtungsvektor, der von dem Vergleich ausgewählt wurde, und wenn der Schritt des Vergleichens ein geringes Vertrauen zu dem ausgewählten Strahlformungsgewichtungsvektor anzeigt, Aktualisieren der Datenbank durch Durchführen des Verfahrens nach Anspruch 2.

4. Verfahren nach einem der vorhergehenden Ansprüche, wobei der Schritt des Auswählens des Strahlformungsgewichtungsvektors Folgendes umfasst
Bestimmen der Funkfrequenzfingerabdrücke in der Datenbank, deren Wert dem empfangenen Funkfrequenzfingerabdruck am nächsten ist, anhand der Datenbank; und
Bestimmen, mit welchen der Strahlformungsgewichtungsvektoren die nächsten Funkfrequenzfingerabdrücke verknüpft sind; und
Gewichten der am engsten verknüpften Strahlformungsgewichtungsvektoren in Abhängigkeit davon, wie nah die verknüpften Funkfrequenzfingerabdruckwerte dem empfangenen Funkfrequenzfingerabdruck sind; und
Auswählen des Strahlformungsgewichtungsvektors in Abhängigkeit von den Gewichtungen.

5. Verfahren nach Anspruch 4, sofern abhängig von Anspruch 3, wobei das Vertrauen zum ausgewählten Strahlformungsgewichtungsvektor in Abhängigkeit von den Gewichtungen bestimmt wird.

6. Verfahren nach einem der vorhergehenden Ansprüche, das Anfangsschritte zum Erzeugen der Datenbank umfasst, wobei die Anfangsschritte Folgendes umfassen:

   Anfordern, dass die Teilnehmereinrichtung ein Signal erzeugt, anhand dessen ein Strahlformungsgewichtungsvektor bestimmt werden kann;
   Bestimmen des Strahlformungsgewichtungsvektors; und
   Aufzeichnen des Funkfrequenzfingerabdrucks und des Strahlformungsgewichtungsvektors in der Datenbank;
   Wiederholen der Anfangsschritte eine Vielzahl von Malen für die Teilnehmereinrichtung an einer Vielzahl von verschiedenen Standorten.

7. Verfahren nach Anspruch 6, das das Übertragen der Anforderung, das Signal, anhand dessen ein Strahlformungsgewichtungsvektor bestimmt werden kann, zur Teilnehmereinrichtung und das Auswählen des Strahlformungsgewichtungsvektors durch Vergleichen des empfangenen Funkfrequenzfingerabdrucks mit den Funkfrequenzfingerabdrücken, die in der erzeugten Datenbank gespeichert sind, nicht mehr umfasst.

8. Verfahren nach Anspruch 6, das das Kreuzvalidieren der Datenbank durch Auswählen eines Strahlformungsgewichtungsvektors für mindestens einige der Funkfrequenzfingerabdrücke, die während der Anfangsschritte empfangen wurden, unter Verwendung der Schritte des Verfahrens nach Anspruch 1 und das Bestimmen einer Genauigkeit des Auswählens durch für jeden der mindestens einigen der Funkfrequenzfingerabdrücke durch Folgendes umfasst:

   Bestimmen, wie viele der ausgewählten Strahlformungsgewichtungsvektoren dieselben sind wie die Strahlformungsgewichtungsvektoren, die während der Anfangsschritte bestimmt wurden;
   und, wenn eine Genauigkeit von mehr als einem vorbestimmten Schwellwert gefunden wird, Durchführen des Verfahrens nach Anspruch 7, und wenn nicht, Fortfahren mit den Anfangsschritten.

9. Verfahren nach einem der vorhergehenden Ansprüche, wobei die Anzeige von Funksignaleigenschaften mindestens eines von Folgendem umfasst: empfangene Funksignalstärke und Funksignalqualität.

10. Verfahren nach Anspruch 8, wobei die Anzeigen von Funksignaleigenschaften Anzeigen Eigenschaften eines Pilotfunksignals, das von jedem Netzwerkknoten übertragen wird, umfassen.

11. Verfahren nach einem der vorhergehenden Ansprüche, wobei die Vielzahl von Strahlformungsgewichtungsvektoren Strahlformungsgewichtungsvektoren aus einem Strahlformungscodebuch für Antennen des Netzwerkknotens umfassen.

12. Netzwerkknoten (20, 40) zum Betreiben in einem drahtlosen Kommunikationsnetzwerk, das eine Vielzahl von Netzwerkknoten umfasst, von denen jeder betreibbar ist, eine Funkzelle zu unterstützen, die ein Gebiet der Funkabdeckung bereitstellt, die es erlaubt, Kommunikationsverbindungen mit Teilnehmereinrichtungen aufzubauen, wobei der Netzwerkknoten Folgendes umfasst:

   Empfangslogik (30, 42), die betreibbar ist, von der Teilnehmereinrichtung einen Funkfrequenzfingerabdruck zu empfangen, der Anzeigen von Eigenschaften von Funksignalen umfasst, die vom Netzwerkknoten und mindestens einem benachbarten Netzwerkknoten in dem drahtlosen Kommunikationsnetzwerk empfangen werden;
   Zugriffslogik, die betreibbar ist, auf eine Datenbank (35) zuzugreifen, die eine Vielzahl von Funkfrequenzfingerabdrücken, die Anzeigen von Eigenschaften von Funksignalen von dem Netzwerkknoten und von benachbarten Netzwerkknoten umfassen, mit einer Vielzahl von Strahlformungsgewichtungsvektoren verknüpft; und
   Vergleichslogik (38), die betreibbar ist, den empfangenen Funkfrequenzfingerabdruck mit den Funkfrequenzfingerabdrücken in der Datenbank zu vergleichen; und
   Auswahllogik (38), die betreibbar ist, einen der Strahlformungsgewichtungsvektoren in Abhängigkeit vom Vergleich auszuwählen.

13. Netzwerkknoten nach Anspruch 12, wobei der Netzwerkknoten ferner eine Vielzahl von Antennen umfasst; und Übertragungslogik (28, 42) zum Anpassen der Phase von jedem der Signale, die von der Vielzahl von Antennen übertragen werden, unter Verwendung des ausgewählten Strahlformungsgewichtungsvektors.

**14.** Netzwerkknoten nach einem der Ansprüche 12 und 13, wobei der Netzwerkknoten einen Datenspeicher umfasst, in dem die Datenbank gespeichert ist.

**15.** Computerprogramm, das, wenn es von einem Computer ausgeführt wird, den Computer veranlasst, das Verfahren nach einem der Ansprüche 1 bis 11 durchzuführen.


**Revendications**

**1.** Procédé de sélection d'un vecteur de pondération de formation de faisceau, ledit procédé comprenant :

la réception en provenance d'un équipement utilisateur (50) d'une empreinte digitale radiofréquence comprenant des indications de caractéristiques de signaux radio reçus en provenance d'un nœud de réseau et d'au moins un nœud de réseau voisin à l'intérieur d'un réseau de communication sans fil ;
l'accès à une base de données (35) associant une pluralité d'empreintes digitales radiofréquence comprenant lesdites indications de caractéristiques de signaux radio en provenance dudit nœud de réseau et de nœuds de réseau voisins à une pluralité de vecteurs de pondération de formation de faisceau ; et
la comparaison de ladite empreinte digitale radiofréquence reçue avec lesdites empreintes digitales radiofréquence à l'intérieur de ladite base de données et la sélection de l'un desdits vecteurs de pondération de formation de faisceau en fonction de ladite comparaison.

**2.** Procédé selon la revendication 1, comprenant une autre étape consistant à demander audit équipement utilisateur de générer un signal à partir duquel un vecteur de pondération de formation de faisceau peut être déterminé, et à enregistrer une empreinte digitale radiofréquence dudit équipement utilisateur et ledit vecteur de pondération de formation de faisceau déterminé dans ladite base de données.

**3.** Procédé selon la revendication 2, dans lequel ladite étape de comparaison de ladite empreinte digitale radiofréquence reçue avec lesdites empreintes digitales radiofréquence à l'intérieur de ladite base de données comprend en outre :
la détermination d'une confiance dans ledit vecteur de pondération de formation de faisceau sélectionné par ladite comparaison, et où ladite étape de comparaison indique une faible confiance dans ledit vecteur de pondération de formation de faisceau sélectionné, la mise à jour de ladite base de données en réalisant ledit procédé de la revendication 2.

**4.** Procédé selon une quelconque revendication précédente, dans lequel ladite étape de sélection dudit vecteur de pondération de formation de faisceau comprend
la détermination à partir de ladite base de données desdites empreintes digitales radiofréquence dans ladite base de données dont la valeur est la plus proche de ladite empreinte digitale radiofréquence reçue ; et
la détermination desquels desdits vecteurs de pondération de formation de faisceau auxquels sont associées lesdites empreintes digitales radiofréquence les plus proches ; et
la pondération desdits vecteurs de pondération de formation de faisceau associés les plus proches en fonction de la proximité desdites valeurs d'empreinte digitale radiofréquence associées à ladite empreinte digitale radiofréquence reçue ; et
la sélection dudit vecteur de pondération de formation de faisceau en fonction desdites pondérations.

**5.** Procédé selon la revendication 4 lorsqu'elle dépend de la revendication 3, dans lequel ladite confiance dans ledit vecteur de pondération de formation de faisceau sélectionné est déterminée en fonction desdites pondérations.

**6.** Procédé selon une quelconque revendication précédente, comprenant des étapes initiales de génération de ladite base de données, lesdites étapes initiales comprenant :

la demande audit équipement utilisateur de générer un signal à partir duquel un vecteur de pondération de formation de faisceau peut être déterminé ;
la détermination dudit vecteur de pondération de formation de faisceau ; et
l'enregistrement de ladite empreinte digitale radiofréquence et dudit vecteur de pondération de formation de faisceau dans ladite base de données ;
la répétition desdites étapes initiales une pluralité de fois pour un équipement utilisateur dans une pluralité d'emplacements différents.

**7.** Procédé selon la revendication 6, comprenant de ne plus transmettre ladite demande audit équipement utilisateur de générer ledit signal à partir duquel un vecteur de pondération de formation de faisceau peut être déterminé, et la sélection dudit vecteur de pondération de formation de faisceau en comparant ladite empreinte digitale radiofréquence reçue avec lesdites empreintes digitales radiofréquence stockées dans ladite base de données générée.

**8.** Procédé selon la revendication 6, comprenant la validation croisée de ladite base de données en sélectionnant un vecteur de pondération de formation de faisceau pour au moins certaines desdites empreintes digitales radiofréquence reçues pendant lesdites étapes initiales en utilisant lesdites étapes dudit procédé selon la revendication 1, et la détermination d'une précision de ladite sélection, pour chacune desdites au moins certaines desdites empreintes digitales radiofréquence par :

la détermination de combien desdits vecteurs de pondération de formation de faisceau sélectionnés sont les mêmes que lesdits vecteurs de pondération de formation de faisceau déterminés pendant lesdites étapes initiales ;
et si une précision supérieure à un seuil prédéterminé est trouvée, la réalisation dudit procédé de la revendication 7 et sinon, la poursuite desdites étapes initiales.

**9.** Procédé selon une quelconque revendication précédente, dans lequel ladite indication de caractéristiques de signal radio comprend au moins l'une de : une intensité reçue de signal radio et une qualité de signal radio.

**10.** Procédé selon la revendication 8, dans lequel lesdites indications de caractéristiques de signal radio comprennent des indications de caractéristiques d'un signal radio pilote transmis par chaque nœud de réseau.

**11.** Procédé selon une quelconque revendication précédente, dans lequel ladite pluralité de vecteurs de pondération de formation de faisceau comprend des vecteurs de pondération de formation de faisceau en provenance d'un livre de codes de formation de faisceau pour des antennes dudit nœud de réseau.

**12.** Nœud de réseau (20, 40) pour un fonctionnement dans un réseau de communication sans fil comprenant une pluralité de nœuds de réseau chacun exploitable pour supporter une cellule radio fournissant une région de couverture radio permettant que des liaisons de communication soient établies avec un équipement utilisateur, ledit nœud de réseau comprenant :

une logique de réception (30, 42) exploitable pour recevoir en provenance dudit équipement utilisateur une empreinte digitale radiofréquence comprenant des indications de caractéristiques de signaux radio reçus en provenance dudit nœud de réseau et d'au moins un nœud de réseau voisin à l'intérieur dudit réseau de communication sans fil ;
une logique d'accès exploitable pour accéder à une base de données (35) associant une pluralité d'empreintes digitales radiofréquence comprenant lesdites indications de caractéristiques de signaux radio en provenance dudit nœud de réseau et de nœuds de réseau voisins à une pluralité de vecteurs de pondération de formation de faisceau ; et
une logique de comparaison (38) exploitable pour comparer ladite empreinte digitale radiofréquence reçue avec lesdites empreintes digitales radiofréquence à l'intérieur de ladite base de données ; et
une logique de sélection (38) exploitable pour sélectionner l'un desdits vecteurs de pondération de formation de faisceau en fonction de ladite comparaison.

**13.** Nœud de réseau selon la revendication 12, ledit nœud de réseau comprenant en outre une pluralité d'antennes ; et une logique de transmission (28, 42) pour ajuster ladite phase de chacun desdits signaux transmis à partir de ladite pluralité d'antennes en utilisant ledit vecteur de pondération de formation de faisceau sélectionné.

**14.** Nœud de réseau selon l'une quelconque des revendications 12 et 13, ledit nœud de réseau comprenant une mémoire de données stockant ladite base de données.

**15.** Programme informatique qui, lorsqu'il est exécuté par un ordinateur, amène ledit ordinateur à réaliser le procédé selon l'une quelconque des revendications 1 à 11.

FIG. 1

FIG. 2

FIG. 3

FIG. 3 (continued)

25

RF
fingerprint

30

receiver
transmitting
logic 28
data base 35
comparison & selection
logic 38

50

20

20

FIG. 4

40

35

| data base |
| comparison & selection logic |
| receiving logic & transmission logic |

38

42

50

20

20

20

FIG. 5

Receive RF fingerprint from UE

Access data base

Compare received RF fingerprints with stored RF fingerprints

Predict preferred beam-forming weighting vector and determine confidence in prediction

is confidence in prediction greater than predetermined value?

No

Yes

Select predicted preferred beam-forming weighting vector

Request UE to generate a beam-forming weighting vector

Store said RF fingerprint and beam-forming weighting vector in said data base

FIG. 6

Request UEs to transmit a beacon signal

Receive beacon signals and RF fingerprints from UEs

Calculate beam-forming weighting vectors from beacon signals

Store RF fingerprints and beam-forming weighting vectors in data base

Predict preferred beam-forming weighting vector by comparing received RF fingerprint with RF fingerprints of data not including that received RF fingerprint

Is predicted value equal to calculated valued?

Predetermined number of predictions performed?  No

Yes

Is accuracy higher than predetermined level?  No

Yes

Transmit signal to UE to stop transmitting beacon signal

Receive RF fingerprint from UE

Access data base

Compare RF fingerprints with stored RF fingerprints

Predict preferred beam-forming weighting vector

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2375267 A


**Non-patent literature cited in the description**

- **CHAO-FANG SHIH et al.** *FastBeam: Practical fast beamforming for indoor environments*